# FASCICULE DE BREVET EUROPEEN

(11) **EP 0 623 485 B1**
(45) Date de publication et mention de la délivrance du brevet: **29.01.1997**
(21) Numéro de dépôt: 94400959.6
(22) Date de dépôt: 03.05.1994
(51) Int. Cl.: B60N 2/22

(54) **Articulation pour sièges de véhicules automobiles**
Gelenkbeschlag für Kraftfahrzeugsitze
Hinge mechanism for motor vehicle seats

(30) Priorité: 07.05.1993 FR 9305501
(43) Date de publication de la demande: 09.11.1994
(73) Titulaire: BERTRAND FAURE AUTOMOBILE "B.F.A.", F-91300 Massy (FR)
(72) Inventeur: DROULON, Georges, 61100 Flers (FR)
(74) Mandataire: Madeuf, René Louis

(56) Documents cités:
- EP-A- 0 159 926
- EP-A- 0 290 309
- EP-A- 0 316 193
- EP-A- 0 410 850
- DE-A- 3 529 887

## Description

On connaît depuis longtemps des articulations utilisées, soit pour régler l'inclinaison du dossier d'un siège de véhicule, soit pour régler la hauteur de l'assise de ce siège.

Ces articulations sont de deux sortes, principalement soit avec deux flasques allongés destinés à permettre la fixation de l'articulation, d'une part, sur la partie fixe du siège considéré et, d'autre part, sur la partie mobile soit au contraire, avec des flasques circulaires présentant, sur leur surface extérieure, des appendices permettant la fixation de ces flasques circulaires tour à tour sur la partie fixe ou sur la partie mobile du siège. Les mécanismes utilisés dans ces articulations sont tous connus et appartiennent, soit au type "continu" avec ou sans satellite, soit au type "discontinu", c'est-à-dire avec au moins un grain, en général trois, répartis à 120° les uns des autres et coopérant avec une denture intérieure formant une couronne mobile.

Les articulations à flasques allongés présentent un inconvénient important dans la mesure où, dans certaines positions angulaires extrêmes d'un flasque par rapport à l'autre, la tenue des deux flasques est mal assurée.

Les articulations à flasques ronds comportent une bague de fermeture qui assure une bonne tenue des flasques quelle que soit leur position angulaire. Mais malheureusement, ces flasques sont difficiles à solidariser à une structure formée notamment d'un tube.

La présente invention a donc pour but de créer une articulation simple pouvant recevoir un mécanisme "continu" ou "discontinu" et qui peut se monter sur des structures d'assise et de dossier différentes, l'une en tôle, l'autre en tube, tout en assurant une bonne tenue d'un flasque à l'autre.

La technique antérieure a fait connaître le document EP-A-0 159 926 (correspondant au préambule de la revendication indépendante) qui peut être considéré comme l'état de la technique le plus proche de la présente invention et qui décrit une articulation pour sièges de véhicules automobiles comportant deux flasques enfermant un mécanisme pouvant être "continu" ou "discontinu" et un couvercle de fermeture, au moins l'un des flasques étant circulaire, l'autre flasque présentant une denture interne également circulaire. En outre, des pattes sont prévues sur le pourtour d'un des flasques.

Conformément à l'invention, l'articulation pour sièges de véhicules automobiles comportant deux flasques enfermant un mécanisme intérieur pouvant être "continu" ou "discontinu" et un couvercle de fermeture, l'un des flasques étant circulaire, est caractérisée en ce que l'autre flasque est allongé par un prolongement radial, le couvercle de fermeture présentant, sur son pourtour, des pattes recourbées venant se fixer sur la demi-circonférence placée du côté prolongé dudit flasque allongé, ledit flasque allongé étant muni, sur ladite demi-circonférence, d'ajours de façon à permettre le passage des pattes.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation de face, côté couvercle, de l'articulation.

La fig. 2 est une coupe diamétrale suivant la ligne II-II de la fig. 3.

La fig. 3 est une élévation de face, côté flasque allongé.

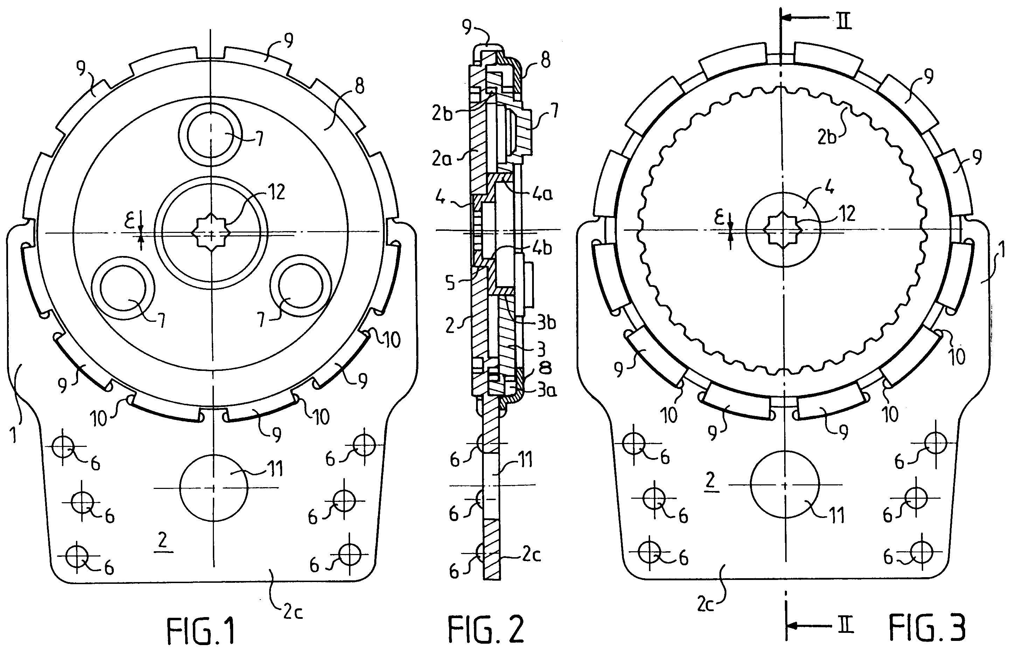

A la fig. 1, on a représenté de face, côté couvercle, une articulation 1 qui, dans le cas présent, comporte un mécanisme intérieur du type "continu" à dentures épicycloïdales sans satellite. Cette articulation comporte ainsi un flasque allongé 2 dont la partie supérieure 2a circulaire présente une denture interne 2b également circulaire, destinée à coopérer avec la denture 3a d'un flasque mobile intérieur circulaire 3 reposant, par sa partie centrale évidée 3b, sur une couronne extérieure 4a d'une coupelle 4 logée, par son moyeu 4b, dans un trou 5 percé dans le centre de la partie supérieure 2a du flasque 2.

Comme on peut s'en rendre compte à la fig. 2, la couronne 4a de la coupelle 4 est décentrée d'une valeur ε par rapport au moyeu 4b de façon que le flasque mobile intérieur circulaire 3 roule par sa denture 3a sur la denture 2b du flasque fixe 2.

De plus, ce dernier présente un prolongement inférieur 2c qui comporte des protubérances 6 permettant la fixation aisée du flasque 2 sur l'une des parties du siège tandis que, d'une manière également connue, le flasque circulaire 3 comporte des bossages 7 disposés à 120° les uns des autres et qui permettent également la fixation aisée de l'articulation sur l'autre élément du siège.

Finalement, il est prévu, venant recouvrir le flasque circulaire 3, un couvercle 8 en forme de couronne dont le pourtour présente des pattes découpées 9 régulièrement espacées qui pénètrent dans des ouvertures allongées 10 percées dans la partie inférieure 2c du flasque 2 puis recourbées à 180° en maintenant ainsi fermement le flasque 3 sur le flasque 2, ce d'autant plus que, dans la partie haute de l'articulation, les pattes 9 du couvercle 8 sont renfermées (voir fig. 2) sur la périphérie extérieure du flasque fixe 2.

On obtient ainsi, d'une manière aisée, la possibilité de maintenir le flasque 3 puisque le montage de l'articulation peut être réalisé sur une machine automatique plaçant la coupelle 4 dans le flasque 2, le flasque 3 sur la couronne 4a de la coupelle 4 puis finalement le couvercle 8, disposé concentriquement à l'ensemble mentionné ci-dessus. Enfin, la machine assure le serrage des pattes 9.

Il y a lieu de signaler qu'un trou 11, percé dans le prolongement 2c du flasque fixe 2, permet le centrage automatique de l'articulation sur l'assise ou sur le dossier.

De plus, la coupelle 4 comporte, dans sa partie centrale, un canal cannelé 12 recevant un axe également cannelé et entraîné soit à la main, soit à l'aide d'un moteur.

Bien entendu, on peut prévoir, dans le flasque fixe 2, des dispositifs permettant le maintien correct de grains coopérant avec la denture circulaire 3a du flasque mobile 3 qui, dans ce cas, n'est pas excentré afin de réaliser un mécanisme intérieur "discontinu", le montage des autres éléments étant identique à celui décrit précédemment.

## Revendications

1. Articulation pour sièges de véhicules automobiles comportant deux flasques (2, 3) enfermant un mécanisme intérieur pouvant être "continu" ou "discontinu" et un couvercle (8) de fermeture, l'un (3) des flasques (2, 3) étant circulaire, caractérisée en ce que l'autre flasque (2) est allongé par un prolongement radial (2c), le couvercle (8) de fermeture présentant, sur son pourtour, des pattes (9) recourbées venant se fixer sur la demi-circonférence placée du côté prolongé dudit flasque (2) allongé, ledit flasque allongé étant muni, sur ladite demi-circonférence, d'ajours (10) de façon à permettre le passage des pattes.

2. Articulation selon la revendication 1, caractérisée en ce que le prolongement (2c) du flasque (2) comporte des protubérances (6) facilitant la fixation de ce flasque alors que le flasque circulaire (3) comporte des bossages (7) disposés à 120° les uns des autres pour permettre sa fixation.

3. Articulation selon la revendication 1 ou 2, caractérisée en ce que le prolongement (2c) du flasque (2) est percé d'un trou (11) permettant la mise en place de cette articulation sur l'assise ou le dossier d'un siège.

## Claims

1. Articulation for motor vehicle seats comprising two flanges (2, 3) enclosing an inner mechanism which can be "continuous or "discontinuous" and a closing lid (8), one (3) of the flange (2, 3) being circular, characterized in that the other flange (2) is elongated by a radial extension (2c), the closing lid (8) having a periphery with curved over tabs (9) that fit on the half circumference placed on the extended side of said elongated flange (2), said elongated flange having said half circumference provided with cut-outs (10) for enabling passage of the tabs.

2. Articulation according to claim 1, characterized in that the extension (2c) of the flange (2) comprises protrusions (6) facilitating fixation of this flange, while the circular flange (3) comprises a set of bosses (7) placed at 120° with respect to one another for enabling its fixation.

3. Articulation according to claim 1 or 2, characterized in that the extension (2c) of the flange (2) is pierced with a hole (11) enabling the positionning of this articulation on the sitting portion or on the backing portion of a seat.

## Patentansprüche

1. Gelenkverbindung für Kraftfahrzeugsitze, mit zwei Flanschen (2, 3), die einen inneren Mechanismus umschließen, der "kontinuierlich" oder "diskontinuierlich" sein kann, und mit einem Verschlußdeckel (8), wobei der eine (3) der Flansche (2, 3) kreisförmig ist, dadurch gekennzeichnet, daß der andere Flansch (2) durch eine radiale Verlängerung (2c) länglich ausgebildet ist, wobei der Verschlußdeckel (8) auf seinem Umfang gebogene Laschen (9) aufweist, die an dem auf der verlängerten Seite des länglichen Flansches (2) angeordneten halben Umfang befestigt sind, und wobei der längliche Flansch auf dem besagten halben Umfang mit Durchbrüchen (10) versehen ist, so daß der Durchgang der Laschen ermöglicht ist.

2. Gelenkverbindung nach Anspruch 1, dadurch gekennzeichnet, daß die Verlängerung (2c) des Flansches (2) Vorsprünge (6) aufweist, die die Befestigung dieses Flansches erleichtern, während der kreisförmige Flansch (3) Erhöhungen (7) aufweist, die zueinander um 120° versetzt angeordnet sind, um seine Befestigung zu ermöglichen.

3. Gelenkverbindung nach Anspruch 1 oder 2, dadurch gekennzeichnet, daß die Verlängerung (2c) des Flansches (2) von einem Loch (11) durchbrochen ist, das das Instellungbringen dieser Gelenkverbindung an der Sitzfläche oder an der Rückenlehne des Sitzes ermöglicht.
